# DEMANDE DE BREVET EUROPEEN

(11) **EP 4 729 136 A1**
(43) Date de publication de la demande: **22.04.2026**
(21) Numéro de dépôt: 25209910.6
(22) Date de dépôt: 20.10.2025
(51) Int. Cl.: A63B 41/08, A63B 45/00, A63B 47/00, B29C 63/00, B29C 65/48, B29C 63/22, B29C 65/02, B29D 22/04, B29D 22/02, A63B 41/02

(54) **PROCÉDÉ DE RECONDITIONNEMENT D'UN BALLON DE JEU**

(30) Priorité: 21.10.2024 FR 2411422
(71) Demandeur: Decathlon, 59650 Villeneuve d'Ascq (FR)
(72) Inventeur: LEE, Terry, 59650 Villeneuve d'Ascq (FR); NI, Mengtong, 59650 Villeneuve d'Ascq (FR); TEXIER, Caroline, 59650 Villeneuve d'Ascq (FR); BEAUFRERE, Fiona, 59650 Villeneuve d'Ascq (FR); LE CUNFF, Uisant, 59650 Villeneuve d'Ascq (FR)
(74) Mandataire: Sayettat, Julien Christian

(57) **Abrégé**

L'invention concerne un procédé de reconditionnement d'un ballon de jeu comprenant une âme (1) sur laquelle une pluralité de panneaux (2) sont collés pour former une enveloppe extérieure, ledit procédé prévoyant de coller les panneaux (2) avec une matière adhésive thermofusible et de remplacer au moins un panneau (2) en prévoyant de : chauffer le ballon au moins au niveau dudit panneau à une température suffisante pour décoller ledit panneau ; retirer ledit panneau de l'âme (1) ; remplacer ledit panneau retiré en collant un nouveau panneau (2) avec une matière adhésive thermofusible afin d'obtenir un ballon reconditionné.

## Description

L'invention concerne un procédé de reconditionnement d'un ballon de jeu.

Elle s'applique en particulier au reconditionnement d'un ballon pour la pratique d'une activité sportive, notamment un sport collectif tel que le basketball, mais aussi le football, le volleyball ou le handball, ou de manière plus générale au reconditionnement de ballons adaptés pour la pratique d'autres activités sportives et/ou de loisirs.

De tels ballons comprennent généralement une âme, notamment formée d'une vessie gonflable entourée d'une carcasse, sur laquelle une pluralité de panneaux sont collés pour former une enveloppe extérieure.

De tels panneaux présentent généralement une face intérieure qui est associée par collage sur l'extérieur de la carcasse, ainsi qu'une face extérieure formant une portion d'une face de rebond du ballon, et sur laquelle des motifs peuvent être formés en relief, notamment pour augmenter le coefficient de friction de ladite face de rebond, et/ou par impression, notamment à des fins esthétiques et/ou commerciales.

Du fait de leur disposition, les panneaux sont susceptibles de s'abimer et/ou de s'user dans le temps, ce qui limite la durée de vie des ballons alors que l'âme et/ou certains autres panneaux peuvent encore être en état d'usage. Par ailleurs, la volonté de pouvoir personnaliser le ballon, notamment en faisant varier l'apparence et/ou le matériau d'au moins certains panneaux, peut amener à jeter un ballon encore en état d'usage.

Il en résulte un gaspillage important qui est d'autant plus problématique que la recyclabilité des ballons demeurent complexe, notamment du fait des différents composants à traiter.

L'invention vise à perfectionner l'art antérieur en proposant notamment un procédé qui permet de reconditionner facilement un ballon en remplaçant au moins un panneau, afin de pouvoir augmenter la durée de vie d'un ballon dont les autres composants seraient encore en état d'usage.

A cet effet, l'invention propose un procédé de reconditionnement d'un ballon de jeu comprenant une âme sur laquelle une pluralité de panneaux sont collés pour former une enveloppe extérieure, ledit procédé prévoyant de coller les panneaux avec une matière adhésive thermofusible et de remplacer au moins un panneau en prévoyant de :
- chauffer le ballon au moins au niveau dudit panneau à une température suffisante pour décoller ledit panneau ;
- retirer ledit panneau de l'âme ;
- remplacer ledit panneau retiré en collant un nouveau panneau avec une matière adhésive thermofusible afin d'obtenir un ballon reconditionné.

D'autres particularités et avantages de l'invention apparaîtront dans la description qui suit, faite en référence aux figures annexées, dans lesquelles :
- la figure 1 représente schématiquement et en coupe partielle la structure d'un ballon de jeu selon l'invention ;
- la figure 2 représente schématiquement et en perspective éclatée le collage des panneaux sur l'âme ;

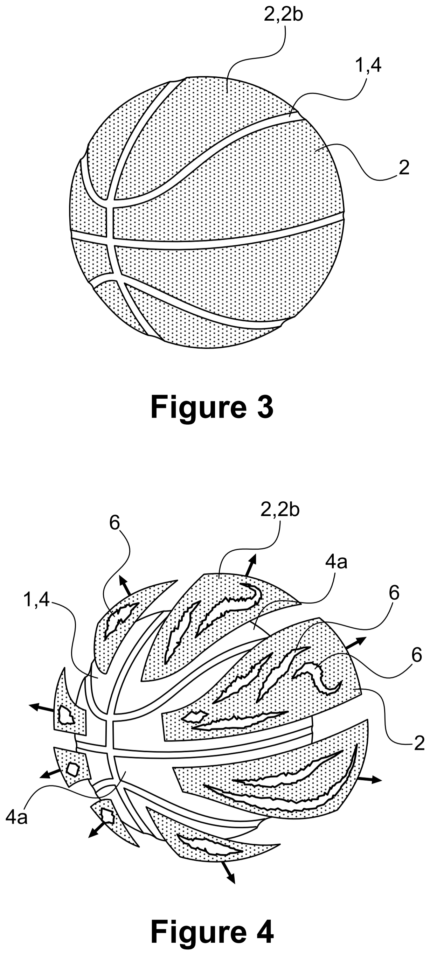

- la figure 3 représente schématiquement et en perspective assemblée le ballon de jeu obtenu à l'issue du collage des panneaux représenté sur la figure 2 ;
- la figure 4 représente schématiquement et en perspective éclatée le retrait de panneaux à remplacer.

En relation avec ces figures, on décrit ci-dessous un procédé de reconditionnement d'un ballon de jeu.

Le ballon de jeu représenté est notamment destiné à la pratique d'un sport collectif tel que le basketball. Toutefois, le procédé peut également s'appliquer à des ballons de jeu destinés à la pratique d'autres sports collectifs, tels que le football, le volleyball ou le handball, ou de manière générale à des ballons pour la pratique d'autres activités sportives et/ou de loisirs.

Le ballon de jeu comprend une âme 1, sur laquelle une pluralité de panneaux 2 sont collés pour former une enveloppe extérieure.

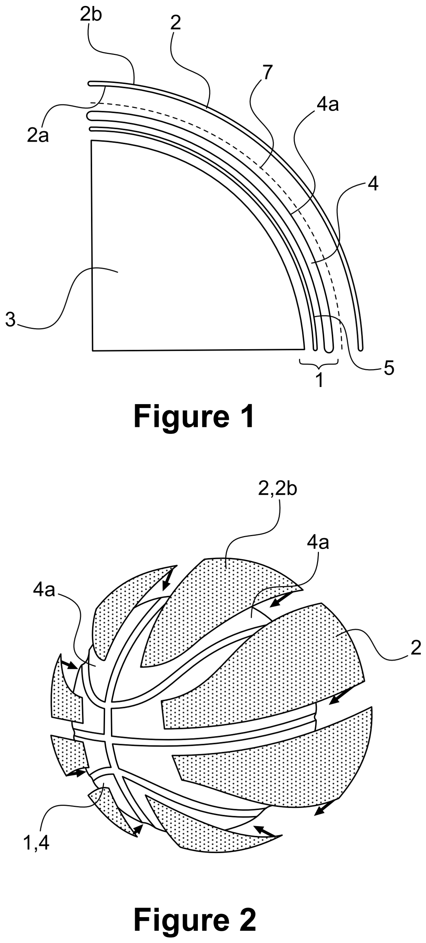

En relation avec la figure 1, l'âme 1 comprend une vessie gonflable 3, notamment à base de caoutchouc naturel (tel que le latex) ou synthétique, qui est entourée d'une carcasse 4, notamment à base de nylon, éventuellement renforcé, les panneaux 2 étant collés sur ladite carcasse.

En particulier, un enroulement 5 est disposé entre la vessie 3 et la carcasse 4, ledit enroulement pouvant être à base de fibres naturelles et/ou synthétiques.

Les panneaux 2 peuvent être réalisés en cuir naturel, composite ou synthétique, en caoutchouc ou en plastique, et présentent chacun une face intérieure 2a qui est associée par collage sur l'extérieur de la carcasse 4, ainsi qu'une face extérieure 2b formant une portion d'une face de rebond du ballon.

La face extérieure 2b de chaque panneau 2 peut comprendre des motifs qui peuvent être formés en relief, notamment pour augmenter le coefficient de friction de la face de rebond, et/ou par impression, notamment à des fins esthétiques et/ou commerciales.

Pour permettre leur éventuel remplacement ultérieur, notamment en cas d'usure et/ou de détérioration 6 mais également en cas de volonté de pouvoir personnaliser ultérieurement au moins certains panneaux 2 du ballon, le procédé prévoit de coller les panneaux 2 sur la carcasse 4 avec une matière adhésive thermofusible 7, de sorte à pouvoir, en cas de nécessité de remplacement d'au moins un desdits panneaux, décoller le(s)dit(s) panneau(x) à remplacer par chauffage, notamment à une température supérieure au point de fusion de ladite matière adhésive.

Selon une réalisation, la matière adhésive thermofusible 7 est à base de polyuréthanne, et est de préférence une colle polyuréthanne réactive (PUR). Une telle colle s'avère en effet facile et rapide à appliquer, tout en présentant, à l'issue de son durcissement, une résistance structurelle élevée, ainsi qu'une souplesse adaptée pour résister aux vibrations et aux chocs, ce qui la rend particulièrement adaptée pour la fabrication de ballons de jeu, sujets à de nombreux chocs contre des surfaces dures, notamment contre le sol, durant la pratique d'une activité sportive et/ou de loisirs. En particulier, le polymère de la matière adhésive 7 peut être choisi de sorte à avoir une résistance à la force de pelage en traction qui permet de faciliter le retrait du panneau 7 chauffé.

Le procédé peut prévoir l'application d'une sous-couche primaire sur la surface extérieure de la carcasse 4 avant d'y coller les panneaux 2, afin d'améliorer l'adhérence desdits panneaux sur ladite carcasse, et ainsi limiter les risques de décollage intempestif desdits panneaux, notamment suite à des chocs répétés du ballon contre une surface dure. Cette étape de prétraitement peut être réalisée à une température de l'ordre de 65°C, pendant une durée d'environ 3 minutes.

Le procédé prévoit ensuite de :
- enduire la matière adhésive 7 à chaud sur l'envers de chaque panneau 2, à une température supérieure à son point de fusion, notamment comprise entre 90°C et 120°C, et de préférence comprise entre 100 et 110°C ;
- appliquer chaque panneau 2 sur la carcasse 4 en vue de leur collage, à une température inférieure au point de fusion de la matière adhésive 7, et de préférence comprise entre 55 et 70°C, afin d'amorcer l'adhésion desdits panneaux sur ladite carcasse ;
- finaliser ledit collage par pressage des panneaux 2 sur la carcasse 4, notamment dans un moule adapté, à une pression de l'ordre de 0,4 kg/cm, pendant une durée comprise entre 90 et 150 secondes.

En cas de nécessité de remplacer au moins un panneau 2, notamment en cas d'usure et/ou détérioration 6 et/ou de volonté de personnalisation dudit panneau, le procédé prévoit de pouvoir :
- chauffer le ballon au moins au niveau du panneau 2 à remplacer, à une température suffisante pour pouvoir décoller ledit panneau ;
- retirer ledit panneau de la carcasse 4 ;
- remplacer ledit panneau retiré en collant un nouveau panneau 2 avec une matière adhésive thermofusible 7, afin d'obtenir un ballon reconditionné ;
et ce de façon répétée en cas de nécessité.

Ainis, la mise en œuvre du procédé de reconditionnement du ballon permet de pouvoir remplacer sélectivement et itérative un ou des panneau(x) 2 qui serait usé et/ou à personnaliser, afin de pouvoir augmenter la durée de vie dudit ballon.

La température de chauffage est notamment supérieure au point de fusion de la matière adhésive thermofusible 7 ayant initialement servi à coller le panneau 2 à remplacer. En particulier, la température de chauffage est légèrement supérieure, notamment de moins de 10%, à ce point de fusion, afin de limiter les risques de détérioration du ballon, tout en limitant le coût en énergie global du reconditionnement dudit ballon.

Pour ce faire, la température de chauffage est comprise entre 90°C et 120°C, et notamment de l'ordre de 110°C. Par ailleurs, le chauffage est maintenu pendant un temps compris entre 5 et 15 minutes, et notamment de 10 minutes, avant de retirer le panneau 2 à remplacer.

Après retrait du panneau 2 usagé, le procédé peut prévoir l'application d'une sous-couche primaire sur au moins une zone 4a de la carcasse 4, notamment la zone 4a de laquelle ledit panneau usagé a été retiré, avant le collage d'un nouveau panneau 2 sur ladite zone.

De façon avantageuse, la matière adhésive thermofusible utilisée pour coller le nouveau panneau est également à base de polyuréthanne, et de préférence une colle polyuréthanne réactive (PUR), pour les raisons développées précédemment.

La matière adhésive 7 est enduite à chaud en envers du panneau 2 de remplacement, avant son application sur la carcasse 4 à fins de collage.

La température d'enduction est de préférence analogue à la température de chauffage, ce qui peut notamment être obtenu en collant le nouveau panneau 2 avec une matière adhésive 7 similaire à celle utilisée initialement pour coller le panneau 2 retiré.

Le nouveau panneau 2 est ensuite pressé sur la carcasse 4 pour son collage, ledit pressage étant notamment réalisé dans un moule adapté, et à une température qui est inférieure aux températures de chauffage et d'enduction, afin d'amorcer le séchage de la matière adhésive 7, et ainsi l'adhésion du nouveau panneau 2 à la carcasse.

En particulier, comme pour le collage initial des panneaux 2, le pressage du panneau 2 de remplacement sur la carcasse peut être réalisé à une température comprise entre 55 et 70°C et à une pression de l'ordre de 0,4 kg/cm, pendant une durée comprise entre 90 et 150 secondes.

Le reconditionnement d'un ballon peut notamment être fait en magasin, avec des moyens techniques adaptés, notamment un moule de pressage et des moyens pour le chauffage et le décollage de panneau(x) usagé(s).

## Revendications

1. Procédé de reconditionnement d'un ballon de jeu comprenant une âme (1) sur laquelle une pluralité de panneaux (2) sont collés pour former une enveloppe extérieure, ledit procédé prévoyant de coller les panneaux (2) avec une matière adhésive thermofusible (7) et de remplacer au moins un panneau (2) en prévoyant de :
- chauffer le ballon au moins au niveau dudit panneau à une température suffisante pour décoller ledit panneau ;
- retirer ledit panneau de l'âme (1) ;
- remplacer ledit panneau retiré en collant un nouveau panneau (2) avec une matière adhésive thermofusible (7) afin d'obtenir un ballon reconditionné.

2. Procédé de reconditionnement selon la revendication 1, **caractérisé en ce que** la matière adhésive thermofusible (7) est à base de polyuréthane.

3. Procédé de reconditionnement selon l'une des revendications 1 ou 2, **caractérisé en ce que** la température de chauffage est comprise entre 90°C et 120°C.

4. Procédé de reconditionnement selon l'une quelconque des revendications 1 à 3, **caractérisé en ce que** le chauffage est maintenu pendant un temps compris entre 5 et 15 minutes avant de retirer le panneau (2).

5. Procédé de reconditionnement selon l'une quelconque des revendications 1 à 4, **caractérisé en ce que** la matière adhésive (7) est enduite à chaud en envers du panneau (2) avant l'application dudit panneau sur l'âme (1) en vue du collage.

6. Procédé de reconditionnement selon la revendication 5, **caractérisé en ce que** la température d'enduction est analogue à la température de chauffage.

7. Procédé de reconditionnement selon l'une quelconque des revendications 1 à 6, **caractérisé en ce qu'**il prévoit l'application d'une sous-couche primaire sur au moins une zone (4a) de l'âme (1) avant le collage d'un panneau (2) sur ladite zone.

8. Procédé de reconditionnement selon l'une quelconque des revendications 1 à 7, **caractérisé en ce que** le panneau (2) est pressé sur l'âme (1) pour son collage.

9. Procédé de reconditionnement selon la revendication 8, **caractérisé en ce que** le pressage est réalisé dans un moule.

10. Procédé de reconditionnement selon l'une des revendications 8 ou 9, **caractérisé en ce que** le pressage est réalisé à une température qui est inférieure à la température de chauffage.

11. Procédé de reconditionnement selon l'une quelconque des revendications 1 à 10, **caractérisé en ce que** l'âme (1) comprend une vessie gonflable (3) qui est entourée d'une carcasse (4).

12. Procédé de reconditionnement selon la revendication 11, **caractérisé en ce qu'**un enroulement (5) est interposé entre la vessie (3) et la carcasse (4).
